# EUROPEAN PATENT SPECIFICATION

(11) **EP 2 644 514 B1**
(45) Date of publication and mention of the grant of the patent: **10.12.2014**
(21) Application number: 13161154.3
(22) Date of filing: 26.03.2013
(51) Int. Cl.: B29C 65/00, B65B 51/30, B65B 9/02, B29C 65/02

(54) **Packaging assembly**
Verpackungsanordnung
Ensemble de conditionnement

(30) Priority: 28.03.2012 IT BO20120166
(43) Date of publication of application: 02.10.2013
(73) Proprietor: O.A.M. - Società per Azioni, 40065 Pianoro (BO) (IT)
(72) Inventor: Martelli, Antonio, 07021 Arzachena (OT) (IT)
(74) Representative: Modiano, Micaela Nadia

(56) References cited:
- WO-A1-2007/091284
- DE-B- 1 028 038
- GB-A- 806 128
- US-A- 4 215 524
- US-A- 5 511 363

## Description

The present invention relates to a packaging assembly.

In the vast field of automatic machines, "packaging machines" are known which are capable of making bags or pouches (typically of heat-sealable material), while simultaneously dosing a predefined quantity of substances into them, usually in powder or granular form. Such a packaging machine is known e.g. from WO2007/091284A1. Such machines are fitted with a dosing unit, which is capable of dispensing the substances to be inserted into the pouches, which in turn are constituted by two facing sheets that are mutually heat-sealed along the perimeter and are formed from a reel of film from which two ribbons are unwound, and subsequently cut, in each cycle, to form the sheets.

More precisely, according to a possible implementation method, the two ribbons, which are arranged mutually facing by way of adapted folders, are unwound from the reel, until respective transverse portions of those ribbons are interposed between two mutually opposite heat-sealing plates, which are capable of translational motion along a direction that is typically horizontal, and perpendicular to the direction of advancement of the ribbon, which descends downward.

At each work cycle, the two plates can thus perform a translational motion in order to be brought into mutual contact, clamping between them the two portions of the ribbons and at the same time producing a first lower heat-sealed seam and two side seams, while the substance in powder form is dosed by the overlying dosing units, by way of gravity, and is thus held inside the pouches that are being formed.

Subsequently, at the end of the heat-sealing, the plates perform a translational motion in the opposite direction thus releasing the ribbons which can advance, descending downward and thus restoring the initial cycle configuration. The subsequent heat-sealing cycle, in addition to starting the formation of a new pouch, also forms the upper seam of the previous pouch, thus definitively sealing in the contents before adapted cutters separate the pouch from the rest of the ribbon thus making the completely formed pouch available for subsequent processing.

It thus seems clear that the movement of the plates is an undoubtedly critical aspect within the process of forming the pouches: only by ensuring an optimal clamping of the ribbons, and for a preset time, it is possible to ensure the correct formation of the pouch, while at the same time guarding against the danger of subsequent breakages and/or of outflow of the substance collected inside, owing to an imperfect heat-sealing.

It should further be noted that the need for an optimal heat-sealing is even more strongly felt in the pharmaceutical field, in which moreover the packaging machines described above are more widely used, since, naturally, in this field the quality standards imposed are extremely high.

Thus packaging machines are known that implement the movement of the plates by way of a mechanism that involves the use of toggle-joint levers, which are coupled, with one end thereof, to the plates themselves, and are capable of pulling them in translational motion, substantially along a direction parallel to the ground (and thus, as indicated earlier, perpendicular to the direction of unwinding of the ribbons, which descend downward, and to the ribbons themselves).

Such an implementation solution is not however devoid of drawbacks.

The choice to use toggle-joint levers to command the plates, and to keep them in the mutual clamping position, results in a plurality of elements that are subjected to considerable pressures.

The levers in fact operate in a cantilever fashion, and the pressures that they transmit to the plates are converted to massive stresses for the components and the structure of the machine.

Moreover, the presence of a plurality of elements in motion entails further problems of reliability: the environment in which the packaging machines are called on to operate is in fact often rich in powders dispersed in the environment (because of the nature of the product to be inserted in the pouches), and such powders can thus easily make contact with the delicate mechanisms for moving the plates, compromising their operation and resulting in breakages and frequent malfunctions over time.

The aim of the present invention is to solve the above-mentioned problems, by providing a packaging assembly that enables an optimal movement of the heat-sealing elements.

Within this aim, an object of the invention is to provide an assembly that ensures the movement of the heat-sealing elements without imposing excessive pressures and stresses on those elements and on the other structural elements.

A further object of the invention is to provide an assembly that provides a reliable and long-lasting movement of the heat-sealing elements, also in work environments that are dirty and powdery.

A further object of the invention is to provide an assembly that is simple and ensures the movement of the plates by employing a minimal number of elements in motion.

Another object of the invention is to provide an assembly that can be easily implemented using elements and materials that are readily available on the market.

Another object of the invention is to provide an assembly that is low-cost and safe in application.

This aim and these and other objects which will become better apparent hereinafter are achieved by a packaging assembly, comprising at least one device for dispensing two ribbons, along respective predefined intermittent advancement lines, which are affected at least by a heat-sealing apparatus, for the stable mutual coupling of corresponding flaps of the ribbons, which face each other and are mutually parallel, and by a dosage unit for dosing a predefined quantity of substance, which can be inserted between the coupled flaps, downstream of said apparatus and of said dosage unit cutting elements, for separating the flaps, being provided, with consequent provision of at least one enclosure of the type of bags or pouches, containing the predefined quantity of substance, said heat-sealing apparatus comprising means for the guided movement of a pair of mutually opposite jaws, which are arranged on opposite sides of said advancement lines and can perform a translational motion to bring respective heat-sealing surfaces into mutual coupling, with consequent heat-sealing of the flaps of ribbon, interposed between said heat-sealing surfaces, characterized in that said movement means comprise, for each one of said jaws, at least one rotating shaft, at least one cam being keyed on said shaft and abutting against respective reference surfaces of the corresponding jaw, for its guided translational motion.

Further characteristics and advantages of the invention will become more apparent from the description of a preferred, but not exclusive, embodiment of the packaging assembly according to the invention, which is illustrated by way of non-limiting example in the accompanying drawings wherein:
Figure 1 is a front elevation view schematically explaining the packaging assembly according to the invention;
Figure 2 is a view from above schematically explaining the packaging assembly according to the invention;

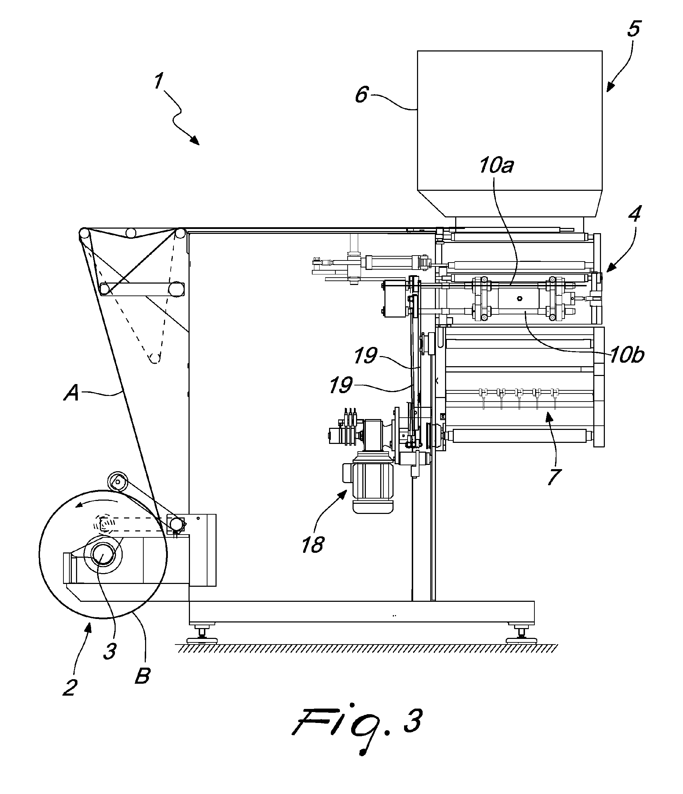

Figure 3 is a side view schematically explaining the packaging assembly according to the invention;
Figure 4 is a front elevation view schematically explaining a first series of components of the packaging assembly, with the heat-sealing surfaces of the heat-sealing apparatus mutually spaced apart;
Figure 5 is a front elevation view schematically explaining the components of the packaging assembly shown in Figure 4, with the heat-sealing surfaces mutually clamping;

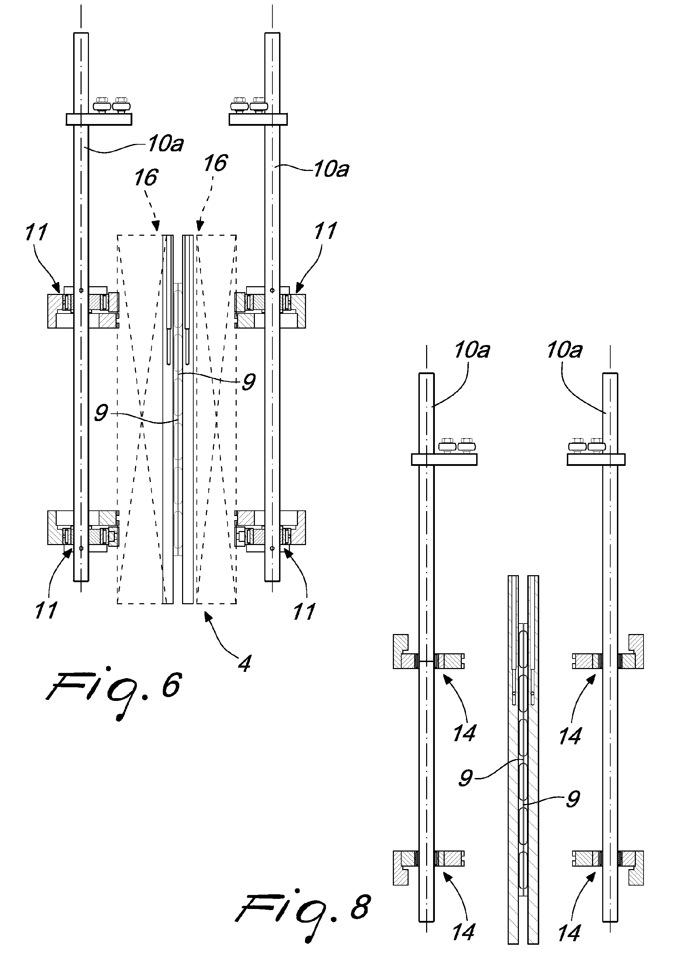

Figure 6 is a view from above schematically explaining the components of the packaging assembly shown in Figure 5 with the heat-sealing surfaces mutually clamping;
Figure 7 is a front elevation view schematically explaining a second series of components of the packaging assembly;
Figure 8 is a view from above schematically explaining the heat-sealing apparatus in Figure 7.

With reference to the figures, the packaging assembly according to the invention, generally designated by the reference numeral 1, is designed for the formation of enclosures of the type of bags or pouches, typically, but not exclusively, from heat-sealable material, and for the simultaneous dosing of a predefined quantity of substances into them, usually in powder or granular form, intended for the pharmaceutical, food, cosmetic etc., markets.

The packaging assembly 1 thus comprises at least one device 2 for dispensing two ribbons A along respective predefined intermittent advancement lines: for example, the device 2 for dispensing can comprise at least one cylindrical core 3 around which a reel of film B is wound, made of the heat-sealable material intended to constitute the enclosures. The reel B is thus progressively unwound and a blade cuts it longitudinally so as to obtain the two ribbons A from the film, which can thus advance along the respective lines until they are, with respective flaps, facing and proximate.

According to an alternative solution, the device 2 for dispensing can comprise two cores 3, which support respective reels of film B, so that the respective ribbon A can be unwound from each one of them.

In any case, whatever the selected type of device 2 for dispensing, when the two flaps are facing and proximate, the lines are affected at least by a heat-sealing apparatus 4, which is capable, at each cycle, of stably coupling the flaps together, by way of heat-sealing.

According to a possible embodiment, the heat-sealing apparatus 4 is capable, in a first cycle of the machine, of forming a (horizontal) lower heat-sealed seam between the flaps of ribbon A, which will constitute the lower edge of the enclosure being formed, and two (vertical) side seams, which will in turn define the sides of the enclosure.

In the subsequent operation cycle, following a descent of the ribbons A along the line by a preset degree, the pouch being formed is brought below the heat-sealing apparatus 4: the apparatus 4 can in this way execute the side seams and the lower seam for new flaps of ribbon A, and at the same time the aforementioned lower heat-sealed seam also constitutes the upper edge of the previous, partially formed, pouch, which in this way is completely closed.

Moreover, the advancement lines are also affected by a dosage unit 5 for dosing a predefined quantity of substance, typically in powder or granular form (but the possibility is not ruled out of dosing substances in other forms, also in the fluid state), which can be inserted between the coupled flaps.

The dosage unit 5 can for example be a feeder 6, overhanging the advancement lines and the heat-sealing apparatus 4: while the heat-sealing apparatus 4 shapes the pouch being formed (by producing, as mentioned earlier, its lower edge and its sides), the dosage unit 5 releases, by gravity, a preset quantity of substance (a medicine, a food product, a cosmetic etc.) into the pouch being formed.

In order to complete the packaging, downstream of the apparatus 4 and of the dosage unit 5 there are cutting elements 7, which are capable of performing the separation of the flaps from the remaining portion of the ribbons A, with consequent provision of at least one enclosure of the type of bags or pouches, containing the predefined quantity of substance, released by the dosage unit 5.

It should be noted that, according to a first embodiment, at each work cycle the packaging assembly 1 provides and packages a pouch full of the desired substance, and it is possible (by conveniently dimensioning the ribbons A and conveniently adapting the other elements) for the assembly 1 to package a higher number of enclosures at each cycle, as a function of specific requirements and of the desired productivity, without departing from the scope of protection claimed herein.

In any case, the heat-sealing apparatus 4 comprises means for the guided movement of a pair of mutually opposite jaws 8, which are arranged on opposite sides of the advancement lines and can perform a translational motion (typically, but not exclusively, along a substantially horizontal direction), to mutually couple respective heat-sealing surfaces 9, with consequent heat-sealing of the flaps of ribbon A, interposed between the heat-sealing surfaces 9, in accordance with the methods described in the foregoing paragraphs.

According to the invention, the movement means comprise, for each jaw 8, at least one rotating shaft 10a and 10b: at least one cam 11 is keyed on such shaft 10a and 10b, and abuts against respective reference surfaces of the corresponding jaw 8, in such a way as to push it in guided translational motion, in order to allow the heat-sealing surfaces 9 to be brought to the configuration for mutual clamping and produce the desired heat-sealed seams between the flaps of ribbon A.

More specifically, according to a non-exclusive embodiment of application of the invention which is of significant practical interest, the movement means comprise, for each jaw 8, at least one pair of mutually integral rotating shafts 10a and 10b, which are arranged substantially horizontally and are superimposed; at least one pair of cams 11 is keyed on each shaft 10a and 10b, and abuts against respective reference surfaces of the corresponding jaw 8.

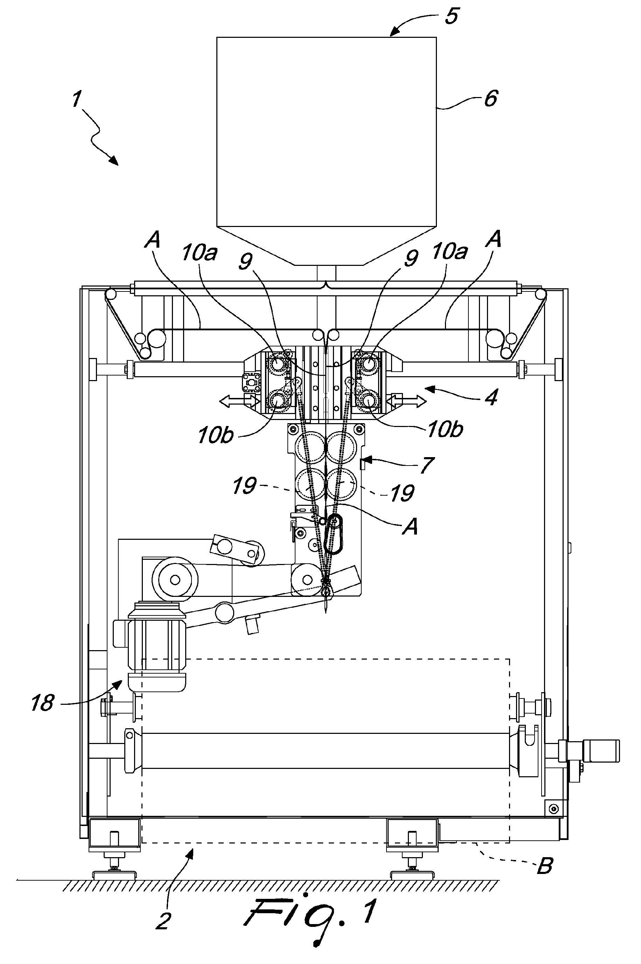

In this manner, the cams 11 cooperate with each other to maintain the vertical alignment of the jaw 8 on which they operate; moreover they produce, with their rotation movement, which is integral with the shaft 10a or 10b on which they are keyed, the guided translational motion of the jaws 8 along a substantially horizontal direction (indicated by the arrows in Figure 1).

Preferably, but not exclusively, each cam 11 is substantially constituted by a first bearing 12, which is keyed externally on a respective bush 13, which is substantially cylindrical and fixed eccentrically to the respective shaft 10 or 10b.

The cams 11 thus have a circular transverse cross-section (which coincides with that of the first bearings 12), and during the rotation of the bushes 13, the first bearings 12 are kept constantly in contact with the reference surfaces (between which they are interposed), which have a distance between centers that is equal to the diameter of the transverse cross-section of the cams 11.

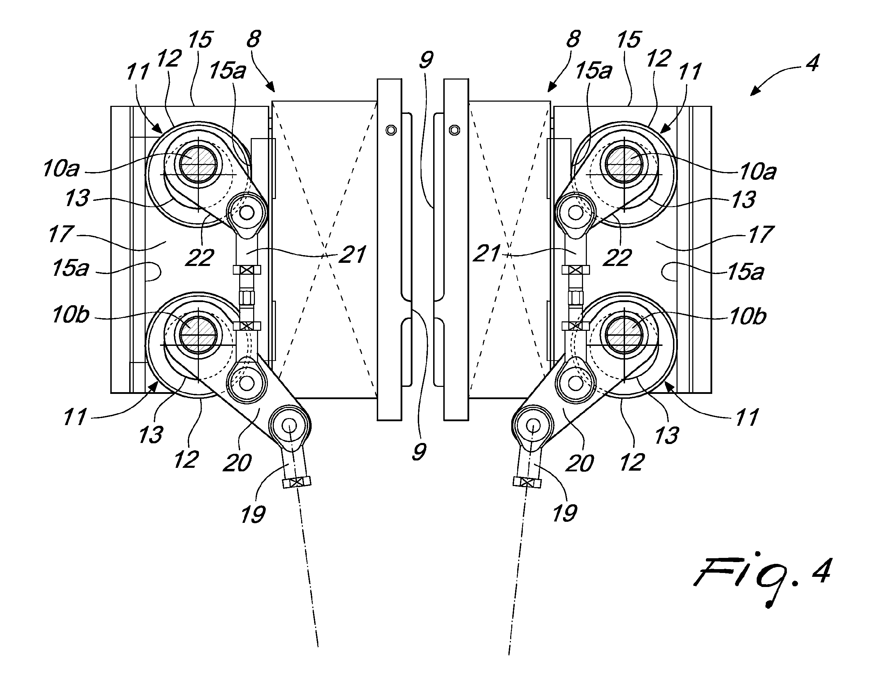

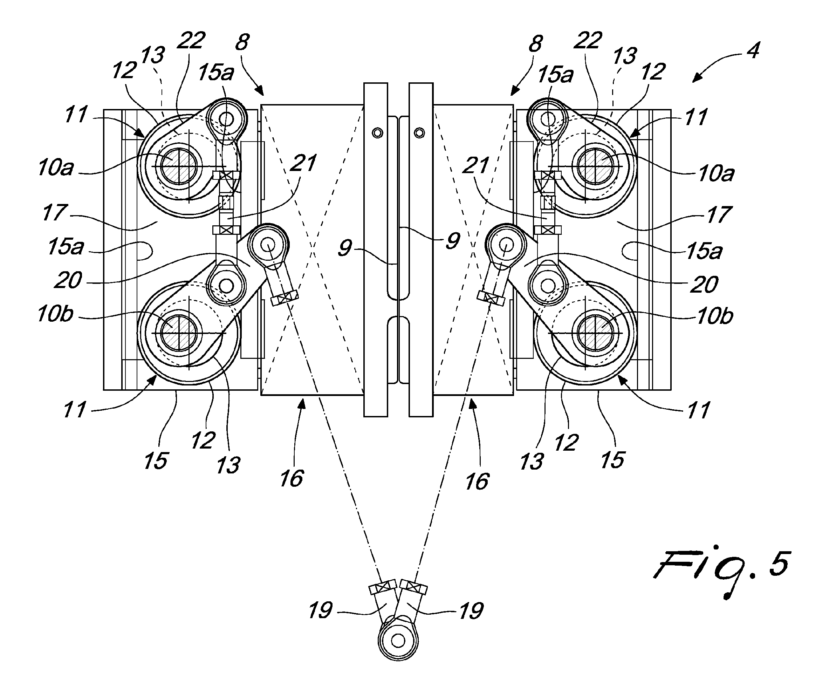

This enables the cams 11, at each work cycle, to ensure the push of translational motion for the respective jaw 8, both in the outward stroke, which concludes when the heat-sealing surfaces 9 are brought together in mutual clamping (as can be seen for example in Figure 5), and in the return stroke, which restores the initial cycle configuration, with the jaws 8 spaced apart in order to allow the advancement of the ribbons A (in the arrangement shown in Figure 4).

Conveniently, the movement means also comprise, for each jaw 8, at least one pair of second, coaxial bearings 14, which are keyed at least along the upper shaft 10a, in order to vertically support the respective jaw 8.

According to a preferred embodiment, cited by way of non-limiting illustration of the application of the invention, each jaw 8 comprises a hollow box-like body 15, which supports a plate 16 on the opposite side of which the respective heat-sealing surface 9 is provided.

The rotating shafts 10a and 10b can be rotatably inserted, at least partially, in the box-like body 15, in order to accommodate the cams 11 and the second, coaxial bearings 14 in an internal cavity 17, parallelepiped in shape, defined in the box-like body 15.

As can be seen for example in Figures 4 and 5, each cam 11 abuts against two mutually opposite internal side walls 15a of the box-like body 15, which thus constitute the previously mentioned reference surfaces and have a distance between centers that is equal to the diameter of the first bearings 12.

The rotation of the bushes 13 and of the first bearings 12, which are arranged eccentrically with respect to the rotating shafts 10 and 10b with which they are integral, thus enables the cams 11 to exert a thrust force on the internal side walls 15a, which causes the guided translational motion of the respective box-like body 15 and of the respective jaw 8, while at the same time ensuring that their vertical alignment is maintained (thanks to the choice to arrange cams 11 at two different levels, corresponding to the two rotating shafts 10a and 10b).

With further reference to the preferred embodiment, the movement means comprise a respective pair of second, coaxial bearings 14, which are keyed on each rotating shaft 10a and 10b: during the translational motion of each jaw 8, each respective second bearing 14 can thus roll along an upper internal wall 15b or a lower internal wall 15c of the corresponding box-like body 15, in order to support the box-like bodies 15 while at the same time defining a vertical reference for them.

Advantageously, the movement means comprise a drive unit 18 (for example, an electric motor), which is associated by respective transmission means with each shaft 10a and 10b, in order to command their simultaneous rotation and thus determine the synchronized movement of the two jaws 8.

In particular, the transmission elements comprise, for each jaw 8, a linkage 19, which is associated at a first end thereof with the drive unit 18; on the opposite side the linkage 19 is rotatably coupled to a first crank 20, which is coupled to the lower shaft 10b (the rotation of which is thus imparted by the drive unit 18). The first crank 20 is moreover fixed rigidly, by way of a respective connecting arm 21, to a second crank 22, which in turn is coupled to the upper shaft 10a (which can thus rotate, actuated by the drive unit 18, integrally with the lower shaft 10b).

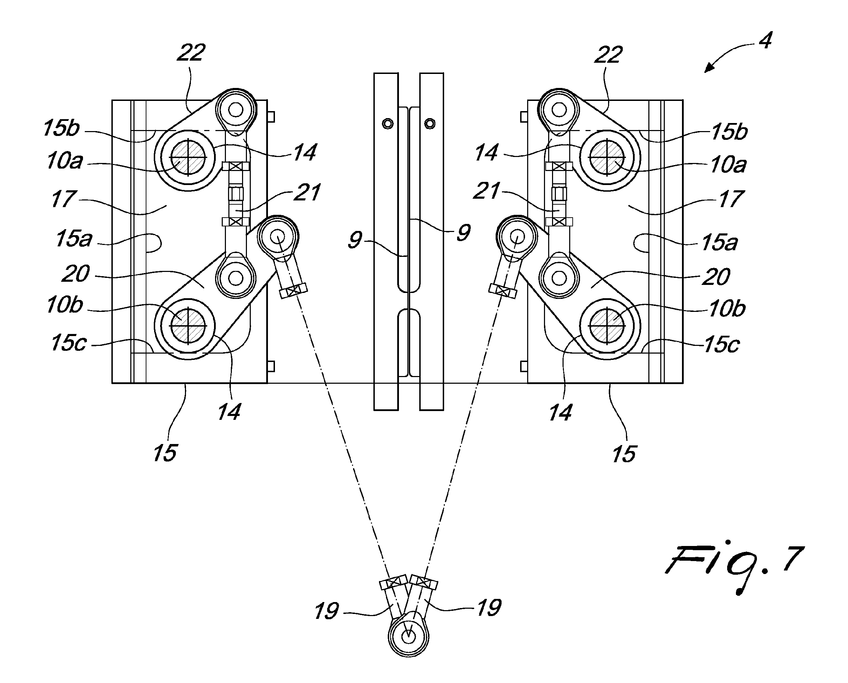

Thus, in short, the drive unit 18 integrally actuates the motion of the two jaws 8 and of the four shafts 10a and 10b thanks to the presence of the two linkages 19, each one of which is associated with two respective cranks 20 and 22, as can also be seen in Figures 1, 4, 5 and 7.

Advantageously, a jaw 8 has an elastically deformable membrane, which faces and is proximate to the respective plate 16, on the side opposite to the heat-sealing surface 9. The membrane is associated with a pneumatic circuit, for the injection of compressed air into it, at the mutual clamping of the heat-sealing surfaces 9. The consequent increase in volume of the membrane thus causes it to press against the plates 16, boosting the mutual coupling force and thus contributing to an optimal heat seal.

Conveniently, the packaging assembly according to the invention comprises a movable apparatus 23 for supporting the rotating shafts 10a and 10b and the jaws 8: such apparatus 23 comprises a pair of supporting arms 24 which are mutually articulated at an end portion thereof (and, at such end portion, such supporting arms 24 are pivoted to the frame of the assembly 1). Each supporting arm 24 rotatably supports a respective pair of rotating shafts 10a and 10b and a corresponding jaw 8.

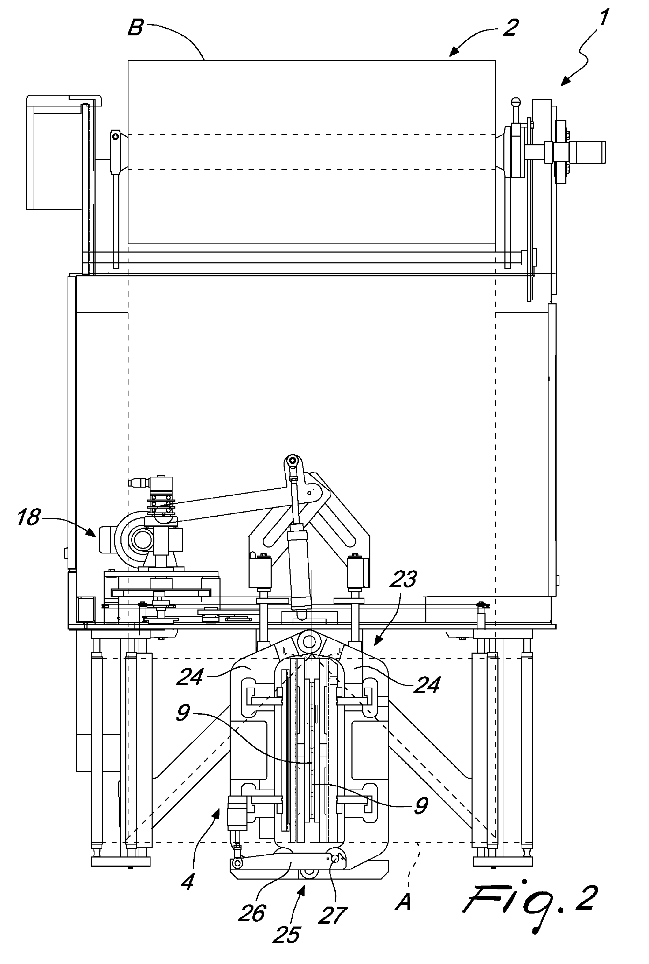

As can be seen in the accompanying Figure 2, the supporting arms 24 are provided, on the opposite side, with mutual coupling means 25 (the function of which will become more apparent below).

More precisely, according to a possible embodiment, the mutual coupling means 25 comprise a sort of hook 26, rotatably coupled to one of the supporting arms 24, which can stably engage with a column 27 that is fixed to the other supporting arm 24.

Whatever the specific embodiment chosen, the mutual coupling means 25 can be deactivated on command in order to allow an operator (or by way of automatic commands) to splay the supporting arms 24 and thus to space each jaw 8 and the respective heat-sealing surface 9 from the flaps of ribbon A (in order to allow maintenance or simply when the assembly is halted, in order to prevent the heat emanated by the heat-sealing surfaces 9 from damaging the ribbons A).

The operation of the packaging assembly according to the invention is as follows.

On the foregoing pages, it has been shown that the packaging assembly 1 according to the invention is capable of providing enclosures, of the type of bags or pouches, which are produced by bringing together, and mutually heat-sealing, two flaps of ribbon A, which are unwound from a reel B of film, wound around a core 3. The assembly 1 is moreover equipped with a feeder 6, which doses a preset quantity of substance into the pouch being formed (before its complete closure), and with cutting elements 7, for separating the formed pouch from the remaining portion of ribbon A.

The heat-sealing of the flaps is ensured by the two mutually opposite jaws 8, which are provided with respective heat-sealing surfaces 9, and which thanks to the movement means can perform a translational motion until they are brought into mutual clamping, thus heat-sealing between them the flaps of ribbon A, which are interposed between said heat-sealing surfaces 9.

As has been shown, the translational motion of each jaw 8 (in both directions) is achieved thanks to two cams 11 which are keyed on each rotating shaft 10a and 10b; the choice to equip the assembly 1 with a plurality of cams 11 arranged on multiple levels (the levels the two shafts 10a and 10b are arranged on) is what also ensures, in addition to the guided translational motion, the necessary maintenance of the vertical alignment of the jaws 8 and of the heat-sealing surfaces 9.

Moreover, second, axial bearings 14 are also keyed on the rotating shafts 10a and 10b and ensure the vertical support and reference of said jaws 8.

It can thus immediately be seen that the movement of the heat-sealing surfaces 9 and of the jaws 8, as well as their vertical support and reference (and the maintenance of the vertical alignment), are obtained thanks to a contained number of elements that rotate about their axis (the shafts 10a and 10b, the cams 11 and the second bearings 14): the stresses and the thrust forces transmitted by the jaws 8 in motion are thus discharged onto the axes of the shafts 10a and 10b, which in turn are directly supported by the frame of the assembly 1 (without the risk of transmitting the thrust forces to elements in motion that are arranged in a cantilever fashion, as occurs with conventional assemblies which resort to toggle mechanisms and other complex kinetic mechanisms).

More precisely, during operation the shafts 10a and 10b are kept mutually parallel and proximate to the advancement lines by the supporting arms 24, which support them, i.e. in the arrangement in which they are shown in the accompanying figures (and in which the plates 16 and the heat-sealing surfaces 9 accomplish the translational motions described previously). In turn, the supporting arms 24 are mutually coupled thanks to the coupling means 25: in this manner, the supporting arms 24, with the shafts 10a and 10b and the jaws 8, constitute a sort of single block, rigid and compact, which is directly supported by the frame of the assembly 1 according to the invention, and it is onto such single block that, positively, the stresses to which the shafts 10a and 10b are subjected can be discharged.

The assembly 1 and the movement means in particular are thus shown to be extremely rigid and compact, thus ensuring reliability and stability over time.

It is also important to note that the elements mentioned above which are responsible for the movement of the jaws 8 are all contained inside the box-like body 15, and are therefore isolated from the external environment: this avoids the risk that the shafts 10a and 10b, the cams 11 and the second bearings 14 could come into contact with powder, dirt or other contaminants present in the external environment. It thus appears evident that this aspect too contributes to ensuring high reliability over time and an optimal operation.

Finally, as has already been shown, it should be emphasized that the possibility of splaying the supporting arms 24 (and with them the shafts 10a and 10b and the jaws 8) makes it possible to gain access to the heat-sealing surfaces and to space them from the ribbons A, for maintenance and cleaning operations, or more simply in order to preserve the ribbons A which would otherwise be damaged owing to the heat emanated by the heat-sealing surfaces 9.

In practice it has been found that the assembly according to the invention fully achieves the set aim, since the use of means of moving the jaws for the heat-sealing of mutually opposite flaps of ribbon, which comprise at least one rotating shaft, on which at least one cam is keyed which in turn abuts against respective reference surfaces of the corresponding jaw, for its guided translational motion, ensures an optimal movement of the jaws and of the heat-sealing surfaces.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Patent Application No. BO2012A000166 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A packaging assembly, comprising at least one device (2) for dispensing two ribbons (A), along respective predefined intermittent advancement lines, which are affected at least by a heat-sealing apparatus (4), for the stable mutual coupling of corresponding flaps of the ribbons (A), which face each other and are mutually parallel, and by a dosage unit (5) for dosing a predefined quantity of substance, which can be inserted between the coupled flaps, downstream of said apparatus (4) and of said dosage unit (5) cutting elements (7) being provided, for separating the flaps, with consequent provision of at least one enclosure of the type of bags or pouches, containing the predefined quantity of substance, said heat-sealing apparatus (4) comprising means for the guided movement of a pair of mutually opposite jaws (8), which are arranged on opposite sides of said advancement lines and can perform a translational motion to bring respective heat-sealing surfaces (9) into mutual coupling, with consequent heat-sealing of the flaps of ribbon (A), interposed between said heat-sealing surfaces (9), **characterized in that** said movement means comprise, for each one of said jaws (8), at least one pair of shafts (10a, 10b), which rotate integrally together, are arranged substantially horizontally and are superimposed, at least one pair of cams (11) being keyed on each one of said shafts (10a,10b), said cams (11) abutting against respective reference surfaces of the corresponding jaw (8), for its guided translational motion, along a substantially horizontal direction, and for maintaining its vertical alignment.

2. The packaging assembly according to claim, **characterized in that** each one of said cams (11) is substantially constituted by a first bearing (12), which is keyed externally on a respective substantially cylindrical bush (13) which is fixed eccentrically to the respective shaft (10a, 10b).

3. The packaging assembly according to one or more of the preceding claims, **characterized in that** said movement means comprise, for each one of said jaws (8), at least one pair of second coaxial bearings (14), which are keyed at least along the upper shaft (10a), in order to support the respective jaw (8) vertically.

4. The packaging assembly according to one or more of the preceding claims, **characterized in that** each one of said jaws (8) comprises a hollow box-like body (15), which supports a plate (16) which has, on the opposite side, said respective heat-sealing surface (9), said rotating shafts (10a, 10b) being able to be rotatably inserted at least partially in said box-like body (15) to accommodate said cams (11) and said second coaxial bearings (14) in an internal cavity (17) which is shaped like a parallelepiped and is formed by said box-like body (15), each one of said cams (11) abutting against two mutually opposite internal side walls (15a) of said box-like body (15), which constitute said reference surfaces, for the guided translational motion of said box-like body (15) and of the respective jaw (8) and for maintaining their vertical alignment.

5. The packaging assembly according to one or more of the preceding claims, **characterized in that** said movement means comprise a respective pair of said second coaxial bearings (14) which are keyed on each one of said rotating shafts (10a, 10b) during the translational motion of each one of said jaws (8), each respective second bearing (14) rolling along an upper internal wall (15b) or a lower internal wall (15c) of said corresponding box-like body (15), for the vertical support and reference of said box-like bodies (15).

6. The packaging assembly according to one or more of the preceding claims, **characterized in that** said movement means comprise a drive unit (18), which is associated by respective transmission means with each one of said shafts (10a, 10b), for their simultaneous rotation and the synchronized movement of said jaws (8).

7. The packaging assembly according to claim 6, **characterized in that** said transmission elements comprise, for each jaw (8), a linkage (19), which is associated, at a first end thereof, with said drive unit (18), said linkage (19) being coupled rotatably, at the opposite end, to a first crank (20) coupled to the lower shaft (10b), said first crank (20) being fixed rigidly, by means of a respective connecting arm (21), to a second crank (22), which is coupled to the upper shaft (10a).

8. The packaging assembly according to one or more of the preceding claims, **characterized in that** one of said jaws (8) has an elastically deformable membrane which faces and is proximate to the respective plate (16), on the side opposite to said heat-sealing surface (9), said membrane being associated with a pneumatic circuit, for injecting compressed air at the mutual coupling of said heat-sealing surfaces (9), with a consequent increase in volume of said membrane and the generation of a pressure on said plates (16) by said membrane, with an increase in mutual coupling force.

9. The packaging assembly according to one or more of the preceding claims, **characterized in that** it comprises a movable supporting apparatus (23) for said rotating shafts (10a, 10b) and said jaws (8), said apparatus (23) comprising a pair of supporting arms (24) which are mutually articulated at an end portion thereof and are provided, on the opposite side, with mutual coupling means (25), each one of said supporting arms (24) rotatably supporting a respective pair of said rotating shafts (10a, 10b) and a corresponding jaw (8), said mutual coupling means (25) being able to be deactivated on command for spacing each one of said jaws (8) and of said heat-sealing surfaces (9) from the flaps of ribbon (A).

## Patentansprüche

1. Verpackungssystem, das mindestens eine Vorrichtung (2) zum Ausgeben entlang jeweiliger vorbestimmter intermittierender Vorschublinien von zwei Bändern (A) aufweist, die durch mindestens eine Heißversiegelungsvorrichtung (4) zur stabilen gegenseitigen Verbindung entsprechender Laschen der Bänder (A), die einander zugewandt und zueinander parallel sind, und eine Dosierungseinheit (5) zum Dosieren einer vorbestimmten Stoffmenge, die zwischen den verbundenen Laschen eingesetzt werden kann, beaufschlagt werden, wobei der Vorrichtung (4) und die Dosiereinheit (5) nachgeordnet Schneideelemente (7) zugeordnet sind, um die Laschen zu trennen, mit anschließender Bereitstellung mindestens einer Umschließung des Typs Taschen oder Beutel, die die vorbestimmte Stoffmenge enthalten, wobei die Heißversiegelungsvorrichtung (4) Einrichtungen zur geführten Bewegung eines Paars einander entgegengesetzter Backen (8), die auf entgegengesetzten Seiten der Vorschublinien angeordnet sind und eine Translationsbewegung vollziehen können, um jeweilige Heißversiegelungsflächen (9) in gegenseitige Verbindung zu bringen, mit anschließendem Heißversiegeln der zwischen die Heißversiegelungsflächen (9) eingelegten Laschen der Bänder (A), **dadurch gekennzeichnet, dass** die Bewegungseinrichtungen für jede der Backen (8) mindestens ein Paar Wellen (10a, 10b) aufweisen, die sich integral zusammen drehen, im Wesentlichen horizontal angeordnet sind und übereinander liegen, wobei mindestens ein Paar Nocken (11) auf jede der Wellen (10a, 10b) aufgeschrumpft ist, wobei die Nocken (11) gegen jeweilige Bezugsflächen der entsprechenden Backe (8) zu ihrer geführten Translationsbewegung entlang einer im Wesentlichen horizontalen Richtung und zum Aufrechterhalten ihrer vertikalen Ausrichtung anliegen.

2. Verpackungssystem nach Anspruch 1, **dadurch gekennzeichnet, dass** jeder der Nocken (11) im Wesentlichen durch ein erstes Lager (12) gebildet ist, das außen auf eine jeweilige im Wesentlichen zylindrische Buchse (13) aufgeschrumpft ist, die exzentrisch an der jeweiligen Welle (10a, 10b) befestigt ist.

3. Verpackungssystem nach einem oder mehreren der vorhergehenden Ansprüche, **dadurch gekennzeichnet, dass** die Bewegungseinrichtungen für jede der Backen (8) mindestens ein Paar zweiter koaxialer Lager (14) aufweist, die zumindest entlang der oberen Welle (10a) aufgeschrumpft sind, um die jeweilige Backe (8) vertikal zu haltern.

4. Verpackungssystem nach einem oder mehreren der vorhergehenden Ansprüche, **dadurch gekennzeichnet, dass** jede der Backen (8) einen hohlen, kastenartigen Körper (15) aufweist, der eine Platte (16) hält, die auf der entgegengesetzten Seite die jeweilige Heißversiegungsfläche (9) hat, wobei die Drehwellen (10a, 10b) drehbeweglich zumindest teilweise in den kastenartigen Körper (15) eingebracht werden können, um die Nocken (11) und die zweiten koaxialen Lager (14) in einem innenliegenden Hohlraum (17) unterzubringen, der wie ein Quader geformt und durch den kastenartigen Körper (15) gebildet ist, wobei jeder der Nocken (11) an zwei einander entgegengesetzten innenliegenden Seitenwänden (15a) des kastenartigen Körpers (15) anstößt, die die Bezugsflächen zur geführten Translationsbewegung des kastenartigen Körpers (15) und der jeweiligen Backe (8) und zum Aufrechterhalten von deren vertikaler Ausrichtung bilden.

5. Verpackungssystem nach einem oder mehreren der vorhergehenden Ansprüche, **dadurch gekennzeichnet, dass** die Bewegungseinrichtungen ein jeweiliges Paar der zweiten koaxialen Lager (14) aufweisen, die während der Translationsbewegung jeder der Backen (8) auf jede der Drehwellen (10a, 10b) aufgeschrumpft sind, wobei jedes jeweilige zweite Lager (14) entlang einer oberen innenliegenden Wand (15b) oder einer unteren innenliegenden Wand (15c) des entsprechenden kastenartigen Körpers (15) zur vertikalen Halterung und zum Bezug der kastenartigen Körper (15) abwälzt.

6. Verpackungssystem nach einem oder mehreren der vorhergehenden Ansprüche, **dadurch gekennzeichnet, dass** die Bewegungseinrichtungen eine Antriebseinheit (18) aufweisen, die durch jeweilige Transmissionseinrichtungen mit jeder der Wellen (10a, 10b) zu deren gleichzeitiger Drehung und zur synchronisierten Bewegung der Backen (8) verbunden ist.

7. Verpackungssystem nach Anspruch 6, **dadurch gekennzeichnet, dass** die Transmissionselemente für jede Backe (8) eine Anlenkung (19) aufweisen, die an einem ersten Ende von dieser mit der Antriebseinheit (18) verbunden ist, wobei die Anlenkung (19) am entgegengesetzten Ende an eine erste Kurbel (20) drehbar angeschlossen ist, die an die untere Welle (10b) angeschlossen ist, wobei die erste Kurbel (20) mittels eines jeweiligen Verbindungsarms (21) starr an einer zweiten Kurbel (22) befestigt ist, die an die obere Welle (10a) angeschlossen ist.

8. Verpackungssystem nach einem oder mehreren der vorhergehenden Ansprüche, **dadurch gekennzeichnet, dass** eine der Backen (8) eine elastisch verformbare Membran hat, die der jeweiligen Platte (16) auf der der Wärmeversieglungsfläche (9) entgegengesetzten Seite zugewandt und nahe ist, wobei die Membran mit einem Pneumatikkreislauf verbunden ist, um Druckluft bei der gegenseitigen Verbindung der Wärmeversiegelungsflächen (9) mit einer anschließenden Volumenzunahme der Membran und der Erzeugung eines Drucks an den Platten (16) durch die Membran mit einer Zunahme von gegenseitiger Verbindungskraft einzuleiten.

9. Verpackungssystem nach einem oder mehreren der vorhergehenden Ansprüche, **dadurch gekennzeichnet, dass** es eine bewegliche Halterungsvorrichtung (23) für die Drehwellen (10a, 10b) und die Backen (8) aufweist, wobei die Vorrichtung (23) ein Paar Halterungsarme (24) aufweist, die an einem Endabschnitt von diesen aneinander angelenkt sind und auf der entgegengesetzten Seite mit gegenseitigen Ankopplungseinrichtungen (25) versehen sind, wobei jeder der Halterungsarme (24) ein jeweiliges Paar der Drehwellen (10a, 10b) und eine entsprechende Backe (8) drehbeweglich haltert, wobei die gegenseitigen Ankopplungseinrichtungen (25) auf Befehl deaktiviert werden können, um jede der Backen (8) und der Heißversiegelungsflächen (9) von den Bandlaschen (A) zu beabstanden.

## Revendications

1. Ensemble de conditionnement comprenant au moins un dispositif (2) pour distribuer deux rubans (A), le long de lignes d'avancement intermittent respectives prédéfinies, sur lesquels agit au moins un dispositif de scellement à chaud (4) pour le couplage stable, les unes aux autres, de pattes correspondantes des rubans (A), qui sont situées les unes en face des autres et parallèles les unes par rapport aux autres, ainsi qu'une unité de dosage (5) pour le dosage d'une quantité prédéfinie de substance pouvant être insérée entre les pattes couplées, des éléments tranchants (7) étant prévus en aval dudit dispositif (4) et de ladite unité de dosage (5) pour la séparation des pattes couplées, avec, par conséquent, la prévision d'au moins une enveloppe de type sac ou pochon contenant la quantité prédéfinie de substance, ledit dispositif de scellement à chaud (4) comprenant des moyens de déplacement guidé d'une paire de mâchoires, opposées l'une à l'autre (8), qui sont disposées sur les côtés opposés desdites lignes d'avancement et peuvent exécuter un mouvement translatoire pour mettre les surfaces de scellement à chaud respectives (9) en couplage l'une avec l'autre, avec, par conséquent, le scellement à chaud des pattes des rubans (A) interposées entre lesdites surfaces de scellement à chaud (9), **caractérisé en ce que** lesdits moyens de déplacement comprennent, pour chacune desdites mâchoires (8), au moins une paire d'axes (10a, 10b) qui tournent intégralement ensemble et sont disposés essentiellement horizontalement et de façon superposée, au moins une paire de cames (11) étant clavetée sur chacun des axes (10a, 10b), lesdites cames (11) butant contre des surfaces de référence respectives de la mâchoire correspondante (8) pour le déplacement translatoire guidé de celle-ci le long d'une direction essentiellement horizontale et pour le maintien de son alignement vertical.

2. Ensemble de conditionnement suivant la revendication 1, **caractérisé en ce que** chacune desdites cames (11) est essentiellement constituée par un premier palier (12) qui est claveté de l'extérieur sur un manchon respectif essentiellement cylindrique (13) qui est fixé de façon excentrique par rapport à l'axe respectif (10a, 10b).

3. Ensemble de conditionnement suivant une ou plusieurs des revendications précédentes, **caractérisé en ce que** lesdits moyens de déplacement comprennent, pour chacune desdites mâchoires (8), au moins une paire de seconds paliers coaxiaux (14), qui sont clavetés au moins le long de l'axe supérieur (10a), de façon à supporter verticalement la mâchoire respective (8).

4. Ensemble de conditionnement suivant une ou plusieurs des revendications précédentes, **caractérisé en ce que** chacune desdites mâchoires (8) comprend un corps en forme de boîtier creux (15) qui supporte une plaque (16) ayant, sur le côté opposé, ladite surface de scellement à chaud (9), lesdits axes de rotation (10a, 10b) étant adaptés à être insérés de façon rotative au moins partiellement dans ledit corps en forme de boîtier (15) pour loger lesdites cames (11) et lesdits seconds logements coaxiaux (14) dans une cavité intérieure (17) qui présente la forme d'un parallélépipède et est formée par ledit corps en forme de boîtier (15), chacune desdites cames (11) butant contre deux parois latérales internes (15a) dudit corps en forme de boîtier (15) qui sont opposées l'une à l'autre et constituent lesdites surfaces de référence pour le déplacement translatoire guidé dudit corps en forme de boîtier (15) et de la mâchoire respective (8) et pour le maintien de leur alignement vertical.

5. Ensemble de conditionnement suivant une ou plusieurs des revendications précédentes, **caractérisé en ce que** ledit moyen de déplacement comprend une paire respective de seconds paliers coaxiaux (14) qui sont clavetés sur chacun desdits arbres de rotation (100a, 100b) durant le déplacement translatoire de chacune desdites mâchoires (8), chaque second logement respectif (14) roulant le long d'une paroi interne supérieure (15b) ou d'une paroi interne inférieure (15c) dudit corps en forme de boîtier correspondant (15) pour le support vertical et de référence desdits corps en forme de boîtier (15).

6. Ensemble de conditionnement suivant une ou plusieurs des revendications précédentes, **caractérisé en ce que** lesdits moyens de déplacement comprennent une unité d'entraînement (18) qui est associée, par des moyens de transmission respectifs, à chacun desdits arbres (10a, 10b) pour leur rotation simultanée et le mouvement synchronisé desdites mâchoires (8).

7. Ensemble de conditionnement suivant la revendication 6, **caractérisé en ce que** lesdits éléments de transmission comprennent, pour chaque mâchoire (8), un élément de liaison (19) qui est associé, à une première de ses extrémités, à ladite unité d'entraînement (18) et couplé de façon rotative, à son autre extrémité, à une première manivelle (20) couplée à l'arbre inférieur (10b), ladite première manivelle étant fixée de manière rigide au moyen d'un bras de jonction respectif (21) sur une seconde manivelle (22) qui est couplée à l'arbre supérieur (10a).

8. Ensemble de conditionnement suivant une ou plusieurs des revendications précédentes, **caractérisé en ce qu'**une desdites mâchoires (8) présente une membrane déformable élastiquement qui est située en face et à proximité de la plaque respective (16), sur le côté opposé à ladite surface de scellement à chaud (9), ladite membrane étant associée à un circuit pneumatique pour injecter de l'air comprimé lors du couplage, l'une à l'autre, desdites surfaces de scellement à chaud (9), avec, par conséquent, une augmentation du volume de ladite membrane et la génération par ladite membrane d'une pression sur lesdites plaques (16) entraînant une augmentation de la force de couplage mutuel.

9. Ensemble de conditionnement suivant une ou plusieurs des revendications précédentes, **caractérisé en ce qu'**il comprend un dispositif de support déplaçable (23) pour lesdits arbres de rotation (10a, 10b) et lesdites mâchoires (8), ledit dispositif (23) comprenant une paire de bras de support (24) qui sont, au niveau d'une portion de leurs extrémités, articulés l'un à l'autre et pourvus, sur le côté opposé, de moyens de couplage mutuels (25), chacun desdits bras de support (24) supportant de façon rotative une paire respective desdits arbres de rotation (10a, 10b) et une mâchoire correspondante (8), lesdits moyens de couplage (25) pouvant être désactivés sur commande pour écarter chacune desdites mâchoires (8) et chacune desdites surfaces de scellement à chaud (9) des pattes de ruban (A).
